# EUROPEAN PATENT APPLICATION

(11) **EP 3 462 060 A1**
(43) Date of publication of application: **03.04.2019**
(21) Application number: 17275155.4
(22) Date of filing: 02.10.2017
(51) Int. Cl.: F16H 57/04, F16H 25/22, F02K 1/76, F16H 25/24

(54) **BALLSCREW ACTUATORS**

(71) Applicant: Goodrich Actuation Systems Limited, West Midlands B90 4SS (GB)
(72) Inventor: MORGAN, Antony, Wolverhampton, West Midlands WV4 4LF (GB); HAWKSWORTH, Andrew, Moreton, Shropshire TF10 9DS (GB)
(74) Representative: Dehns

(57) **Abstract**

An actuator comprises a ballscrew and an actuator rod comprising a ballnut, the ballnut disposed about the ballscrew, wherein the ballnut and ballscrew share a longitudinal axis. A plurality of balls are received within a helical passageway defined between the ballscrew and ballnut. The actuator comprises a lubricant housing comprising a pair of opposed axially spaced walls on an actuator-side and a drive-side of the lubricant housing respectively. The actuator rod extends through the actuator-side wall, wherein the axially spaced walls are joined by at least one axially extending wall, the walls together defining an enclosed bore. A portion of the ballscrew, ballnut and actuator rod are disposed within the bore, and the bore is partially filled with a volume of oil lubricant.

## Description

### TECHNICAL FIELD

The present disclosure relates to ballscrew actuators.

### BACKGROUND

It is known to use ballscrew actuators to translate a rotational displacement into an axial displacement while minimising frictional losses. Ballscrew actuators are used in a variety of applications, including in aircraft and aircraft engines.

Ballscrew actuators are generally lubricated in order to facilitate relative motion between the screw, nut and ball bearings. Typically, a grease is used as a lubricant, being retained within the ballnut by appropriate seals. However, such seals may not always be effective in retaining and containing the lubricant. Containment of lubricant is desirable in order to maximise the period between reapplications of lubricant to the actuator, and further to minimise adverse environmental effects.

### SUMMARY

According to one embodiment of the present disclosure, there is an actuator comprising a ballscrew and an actuator rod. The actuator rod comprises a ballnut, the ballnut disposed about the ballscrew, wherein the ballnut and ballscrew share a longitudinal axis. A plurality of balls are received within a helical passageway defined between the ballscrew and ballnut. The actuator comprises a lubricant housing comprising a pair of opposed axially spaced walls on an actuator-side and a drive-side of the lubricant housing respectively. The actuator rod extends through the actuator-side wall, wherein the axially spaced walls are joined by at least one axially extending wall, the walls together defining an enclosed bore. A portion of the ballscrew, ballnut and actuator rod are disposed within the bore, and the bore is partially filled with a volume of oil lubricant.

The actuator may further comprise an actuator-side seal at the actuator-side wall, the actuator-side seal sealingly engaged with the actuator rod.

The ballscrew may extend through the drive-side wall, wherein the actuator further comprises a drive-side seal at the drive-side wall, the drive-side seal sealingly engaged with the ballscrew.

The actuator may further comprise a shaft connected to and configured to drive the ballscrew, wherein the shaft extends through the drive-side wall. The actuator may further comprise a drive-side seal at the drive-side wall, the drive-side seal sealingly engaged with the shaft.

The actuator may further comprise at least one hole through a wall of the actuator rod, the hole fluidly connecting the bore and the helical passageway.

One or more of the at least one radially-extending holes may comprise a flow-restriction device.

The actuator rod may further comprise a piston disposed within the bore and configured to move with the actuator rod, wherein the piston has an axial cross-sectional shape complementary to a cross-sectional shape of the bore.

The piston may comprise a piston seal on a radially outer surface of the piston, the piston seal sealingly engaging with the axially-extending wall.

The actuator may further comprise at least one hole extending through the piston from one axial side thereof to an opposed axial side.

One or more of the at least one axially-extending holes may comprise a flow-restriction device.

The flow restriction device (33) may be a check valve.

The flow restriction device may be configured to allow differing amounts of flow through the wall or piston based on a position or a movement direction of the actuator.

The oil lubricant may fill 40% or less of the volume of the empty space of the bore. The oil lubricant may fill 10% or more of the volume of the empty space of the bore.

The actuator may further comprise a drive motor and gearing external to the lubricant housing, the drive motor attached to rotatably drive the ballscrew via the gearing.

There is also provided a thrust reverser for an aircraft engine comprising the actuator according to any of the above.

### BRIEF DESCRIPTION OF THE DRAWINGS

Fig. 1 shows a view of a ballscrew actuator in accordance with this disclosure;
Fig. 2 shows a magnified view of a portion of the ballscrew actuator of Fig. 1;
Figs. 3 to 6 show views of the ballscrew actuator of Fig. 1 at different stages of actuation.

### DETAILED DESCRIPTION

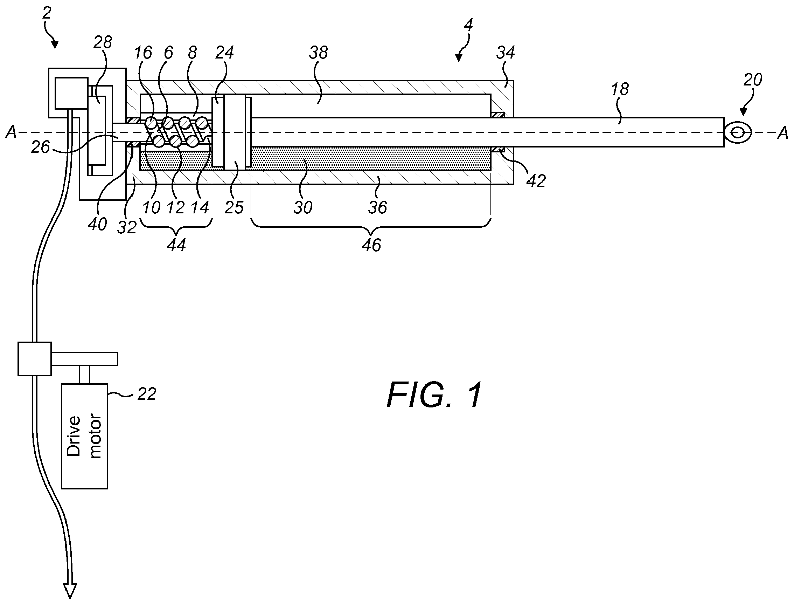

Fig. 1 shows a ballscrew actuator assembly 2 comprising a ballscrew 6, a ballnut 8, and a plurality of balls 16. The ballscrew 6 and ballnut 8 have corresponding opposed helical grooves 10 and 12, which together form a helical passage 14 for receiving the plurality of balls 16. The balls 16 allow relative rotation of the ballscrew 6 and the ballnut 8 with minimal friction. Rotation of the ballscrew 6 relative to the ballnut 8 produces an axial movement of the ballnut 8 along a shared axis A of the ballnut 8 and ballscrew 6.

The ballnut 8 forms part of an actuator rod 18. The actuator rod 18 is hollow, so as to accommodate the ballscrew 6. The ballnut 8 may be integrally formed with the actuator rod 18 or attached thereto by suitable means such that the ballnut 8 is rotationally fixed relative to the actuator rod 18.

The actuator rod 18 is provided with a rod end coupling 20 at an end opposite the ballnut 8, for connection to an external component to be actuated. The coupling 20 may be such as to prevent rotation of the actuator rod 18, and thus ballnut 8, about the axis A, whereby rotation of the ballscrew 6 causes an axial movement of the ballnut 8 actuator rod 18.

Other mechanisms may be provided as appropriate to prevent rotation of the actuator rod 18 about its axis A. For example, the ballscrew actuator assembly 2 may include a forked-end rod mounted in parallel to the actuation rod 18, where the forked ends pass through bushings in an extension portion of a housing 4. In another example, the actuator rod 18 may be rotationally restrained by linkages to the housing 4, for example a two-piece bridge, restraining the actuator rod 18 through shear force across the linkages.

Rotation of the ballscrew 6 may be provided by any known means. In the embodiment shown, the ballscrew 6 is driven by a drive motor, for example an electric motor 22, via a coupling. The coupling may comprise a flexible or other shaft 26 having gearing 28 for engaging the motor 22 and ballscrew 6.

In order to minimise frictional forces between the plurality of balls 16 and the ballnut 8 and ballscrew 6, an oil lubricant 30 is provided. The lubricant 30 is environmentally contained by a lubricant housing 4 surrounding a portion of the ballscrew 6 and ballnut 8. Containment of the lubricant 30 is provided both to minimise leakage, and to minimise adverse effects from the outside environment such as ingress of environmental elements.

The lubricant housing 4 comprises a pair of end walls 32, 34, axially spaced along the axis A. The walls include a first, drive-side wall 32 and a second, actuator-side wall 34. The walls 32, 34 are connected by at least one further connecting wall 36, which axially extends along the axis A. The axially spaced and axially extending walls together form a bore 38, a hollow space within the lubricant housing 4 which is entirely enclosed and sealed by the walls 32, 34, 36.

In the embodiment shown, the bore 38 has a circular cross-sectional shape in the direction of axis A. As such, the embodiment shown comprises a single axially extending wall 36 forming a cylindrical lubricant housing 4. In other examples, the bore 38 may have a different cross-sectional shape, such as a square shape. In such examples, more axially extending walls 36 are present.

In the embodiment shown, the drive motor 22 for rotating the ballscrew 6 is located outside of the lubricant housing 4. The shaft 26 extends through the drive-side wall 32 of the lubricant housing 4 to connect the ballscrew 6 to the drive mechanism; in the embodiment shown, this mechanism is the gearing 28 and motor 22. The ballscrew 6 may be suitably supported by a bearing (not shown) in the drive-side wall 32.

In order to minimise leakage of lubricant 30 or ingress of environmental elements at the location, a first rotary seal 40 is provided at the drive-side wall 32. In the embodiment shown, the first seal 40 provides a sealing contact between the drive-side wall 32 and the ballscrew 6. Alternatively, the first seal 40 could be positioned to provide a sealing interface between the gearing 28 and an associated rotating input.

Similarly, actuator rod 8 extends through the actuator-side wall 34 to connect to the external component. A second, linear, seal 42 provides a sealing engagement between the actuator-side wall 34 and the actuator rod 8 to prevent leakage and ingress.

The embodiment shown includes a piston 24 disposed within the bore 38. The piston 24 is connected to the ballnut 8 and/or the actuator rod 18 such that it moves axially therewith during actuation of the ballscrew assembly. The piston 24 may be integrally formed with the actuator rod 18 and/or the ballnut 8, or may be mounted by any other means such that actuation of the ballscrew 6 results in axial movement of the piston 24.

The piston 24 has a cross-sectional shape in the direction of axis A which is complementary to a cross-sectional shape of bore 38. Thus, in the embodiment shown, the piston 24 has a circular cross-section.. The piston 24 separates the bore into a drive-side chamber 44 and an actuator-side chamber 46. The piston 24 will also provide an additional support for the ballscrew 6 through its interaction with the ballnut 8.

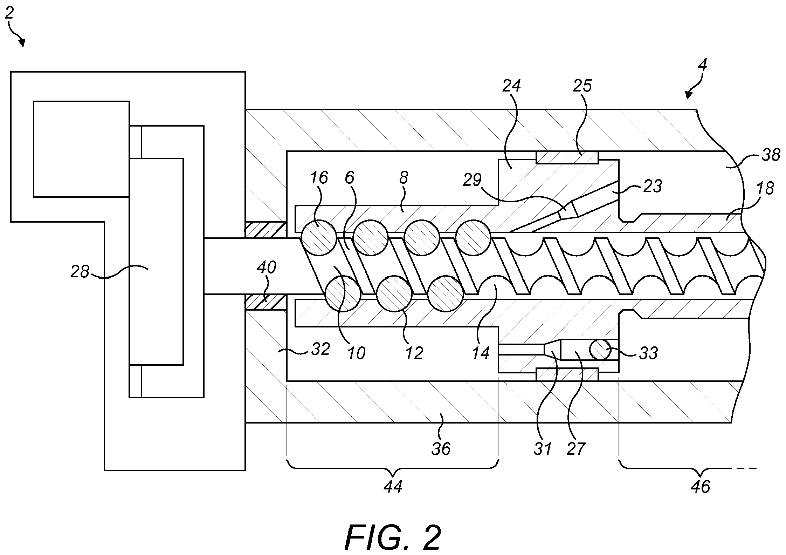

As shown in Fig. 2, the helical passage 14 is open to the drive-side chamber 44 at an end of the ballnut 8. On the other side of the piston 24, one or more holes 23 extend through a wall of the actuator rod 18, fluidly linking the actuator-side chamber 46 of the bore 38 and the helical passageway 14 in the interior of the hollow actuator rod 18. A fluid passageway is thereby formed across the piston 24. The lubricant 30 is able to flow freely through this fluid passageway. The hole or holes (23) may (as shown) extend axially and radially, overall extending diagonally through the actuator rod wall, or with any other geometry. However, otherwise oriented, for example radial, passages may be formed.

In the retracted or un-actuated position of the actuator 2 shown in Fig. 1, the lubricant 30 is disposed in both the drive-side chamber 44 and the actuator-side chamber 46. A portion of the lubricant 30 also rests within the actuator rod 18.

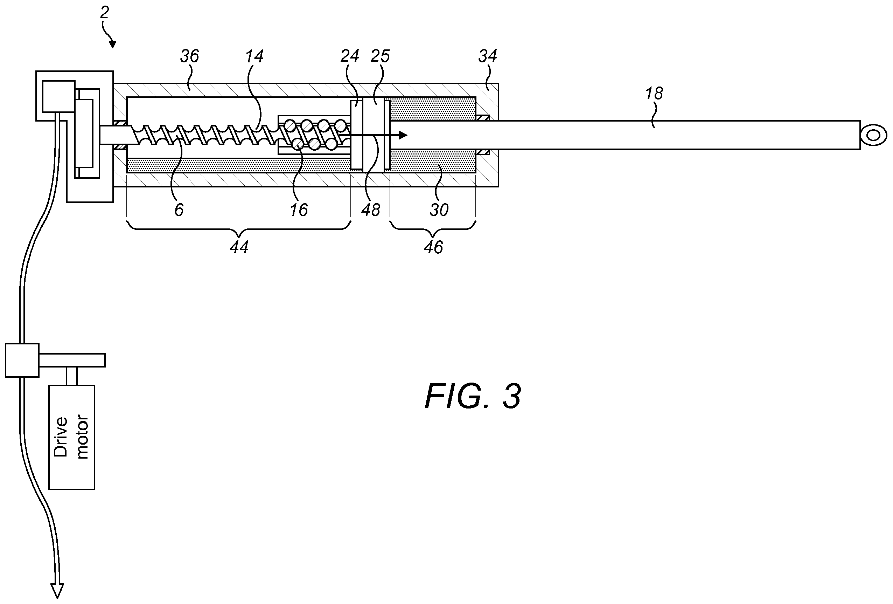

Fig. 3 shows the ballscrew assembly 2 in a partially-extended configuration. Movement of the actuator rod 18 between the positions shown in Fig. 1 and Fig. 3 is actuated by rotation of the ballscrew 6 to move actuator rod 18 and piston 24 toward the actuation-side wall 34. The movement of the piston 24 compresses the lubricant 30 in the actuator-side chamber 46 between the piston 24 and the actuation-side wall 34. The resulting pressure differential across the piston 24 causes a flow of lubricant, shown at 48, through the helical passageway 14 to the opposing side of the piston 24. By this mechanism, lubrication is provided to the helical passageway 14 and the plurality of balls 16 therein.

There may be a gap between the piston 24 and the axially extending wall 36, such that the lubricant 30 is free to flow through the gap and between the drive-side chamber 44 and the actuator-side chamber 46. In such an embodiment, movement of the piston 24 causes some flow around the piston 24.

Alternatively, as in the embodiment shown, a sliding piston seal 25 may be provided on the outer radial surface of the piston 24 to sealingly engage with the axially extending wall 36 and limit or substantially prevent fluid flow around the piston. The presence of a piston seal 25 thereby increases the amount of fluid which flows through the helical passageway 14.

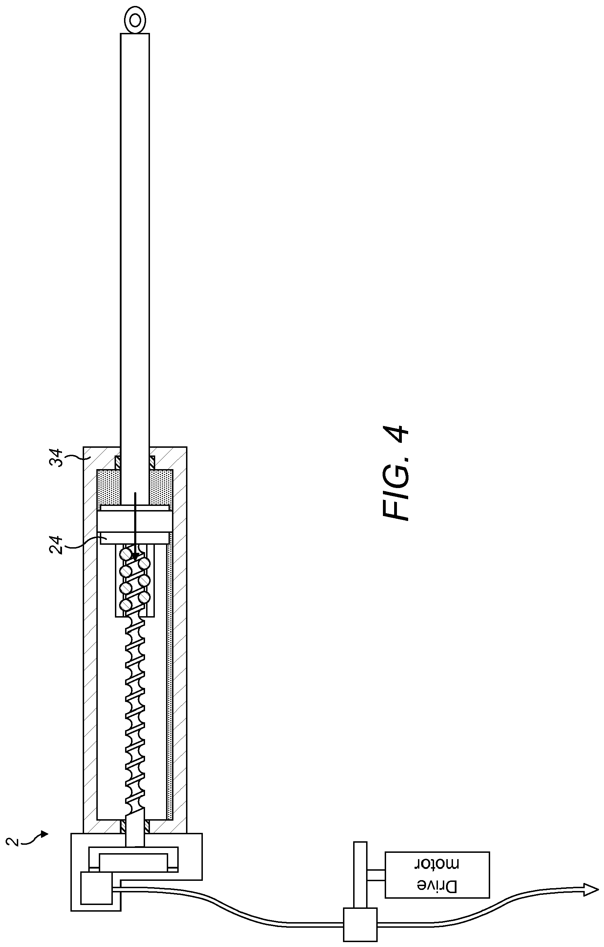

Lubricant 30 is transferred from the actuator-side chamber 46 to the drive-side chamber 44 via the flow through the helical passageway 14 and, where present, the flow around the piston 24. In the fully deployed configuration of the ballscrew actuator assembly 2 as shown in Fig. 4, the piston 24 may maintain a clearance from the actuator-side wall 34.

It is important that the lubricant flow mechanism described above does not significantly impede the movement of the actuator 2, for example by pressure-locking the actuator 2. To this end, it may be desirable to control the rate of flow from the actuator-side chamber 46 to the drive-side chamber 44.

A controlled flow-restriction device 29 may be associated with the radially extending hole or holes 23 in the actuator rod 18. In certain embodiments, the flow-restriction 29 may simply be a hole of a particular shape or structure, for example a hole of an appropriate diameter. The flow-restriction device 29 or feature may be bidirectional, or may be uni-directional such as a check valve 33, as shown schematically in Fig. 2. The flow-restriction device or feature may be configured to allow differing amounts of flow in the deployed and stowed configurations of the ballscrew actuator assembly 2.

It may be necessary to allow greater flow across the piston 24 during actuation to prevent impedance of the actuator 2. As such, additional flow holes 27 may be provided as shown in Fig. 2, extending substantially axially through the piston 24 to join the actuator-side chamber 46 and the drive-side chamber 44. These flow holes 27 may have flow-restriction devices, for example passage restriction 31 or check valve 33, as described in relation to the radially extending holes 23. The check valve may act to limit flow during deployment of the actuator 2, while allowing flow during stowage of the actuator 2. The additional flow holes 27 may, as shown, extend parallel to the axis A of the ballnut 8. In various embodiments, however, the additional flow holes 27 may extend at an angle, radial and/or axial, to the ballnut axis A.

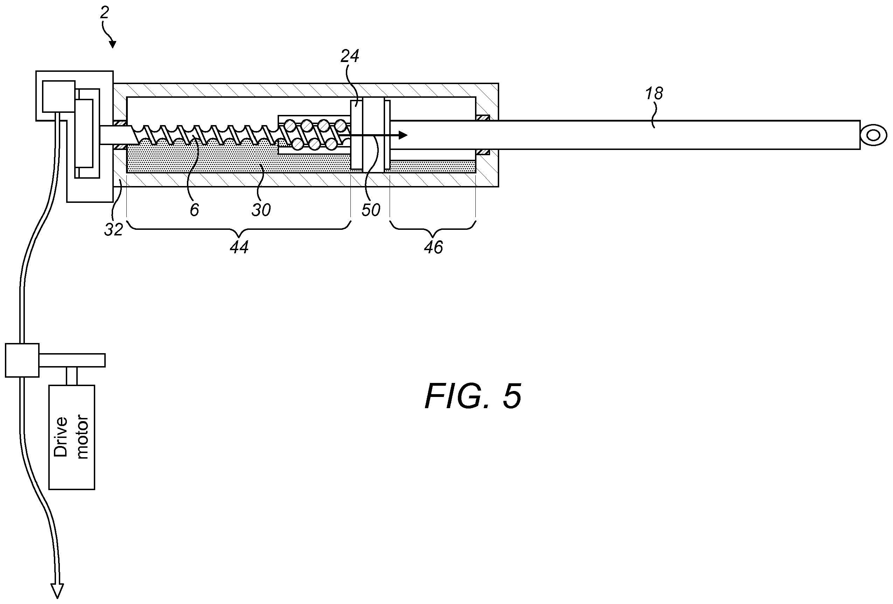

Fig. 5 shows the ballscrew assembly 2 during retraction, where the actuator 2 returns to the initial, un-actuated position. Reverse rotation of the ballscrew 6 moves the piston 24 towards the drive-side wall 32 and decreases the size of the drive-side chamber 44. Lubricant flows from the drive-side chamber 44 to the actuator-side chamber 46 through the helical passageway 14, as shown at 50.

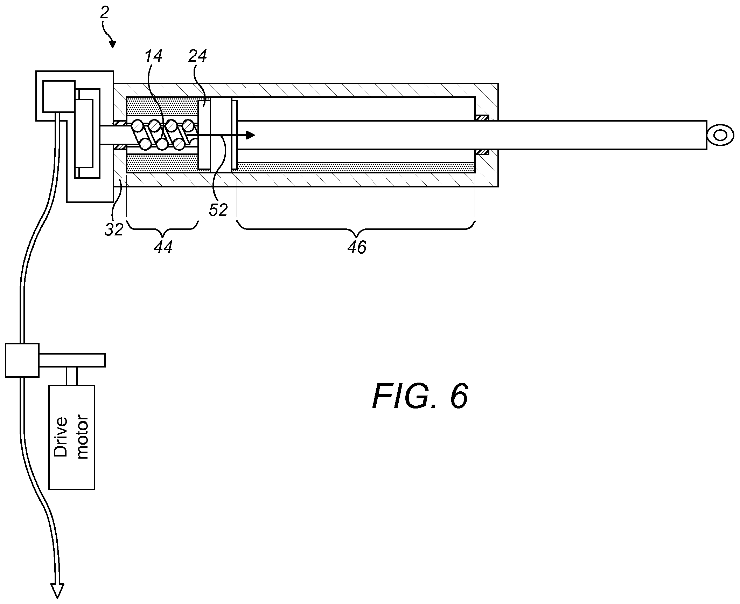

Fig. 6 shows the actuator 2 after returning to the retracted, un-actuated position. In the stowed configuration, the piston 24 has a clearance from the drive-side wall 32.

Between operations of the actuator 2, a portion of the lubricant 30 built up in the drive-side chamber 44 during the actuation step returns to the actuator-side chamber 46 through any of the various fluid passageways described above, as shown in Fig. 6 at 52. This return-flow may be induced by gravity, incidental vibration of the actuator 2 or by any other means.

During actuation, a vacuum pressure acts on the piston 24. The degree of pressure generated is a function of the volumetric proportion of gas to lubricant 30 in the lubricant housing 4; a greater relative volume of gas lowers this vacuum pressure. A small gaseous volume results in undesirably high operational pressure swings during operation of the actuator 2. This consideration affects the selection of the lubricant volume proportion.

To account for these pressure considerations, the lubricant 30 may occupy less than 40% of the volume of the empty space of the lubricant housing 4, where the empty space of the housing 4 is the total volume of the housing 4 minus the volume occupied by components within the bore 38, such as the ballscrew 6, ballnut 8, actuator rod 18 and piston 24. The lubricant 30 may occupy between 10% and 40% of the empty space volume of the lubricant housing 4.

The actuator 2 could be utilised in aerospace applications, for example as the linear actuator of an aircraft engine thrust reverser. Thrust reverse actuators are required to operate reliably, while having low mass and low maintenance intervals.

The sealed lubricant housing 4 reduces lubricant leakage of the actuator 2 as compared to prior art ballscrew actuator arrangements (in particular, grease-lubricated ballscrews), resulting in desirably increased maintenance intervals. The lubricant housing 4 also serves to protect the ballscrew from environmental concerns such as grit, salt, and ice improving reliability of the actuator and increasing maintenance intervals. This may be particularly beneficial in the context of a thrust reverser actuator as such an actuator may be subject to significant air blast during operation.

## Claims

1. An actuator (2) comprising:
a ballscrew (6);
an actuator rod (18) comprising a ballnut (8), the ballnut (8) disposed about the ballscrew (6), wherein the ballnut (8) and ballscrew (6) share a longitudinal axis (A);
a plurality of balls (16) received within a helical passageway (14) defined between the ballscrew (6) and ballnut (8); and
a lubricant housing (4) comprising a pair of opposed axially spaced walls (32, 34) on an actuator-side and a drive-side of the lubricant housing (4) respectively, the actuator rod (18) extending through the actuator-side wall (34), wherein the axially spaced walls (32, 34) are joined by at least one axially extending wall (36), the walls together defining an enclosed bore (38), wherein a portion of the ballscrew (6), ballnut (8) and actuator rod (18) are disposed within the bore (38), and the bore (38) is partially filled with a volume of oil lubricant (30).

2. The actuator (2) of claim 1, further comprising an actuator-side seal (42) at the actuator-side wall (34), the actuator-side seal (42) sealingly engaged with the actuator rod (18).

3. The actuator (2) of claim 1 or 2, wherein the ballscrew (6) extends through the drive-side wall (32), and wherein the actuator (2) further comprises a drive-side seal (40) at the drive-side wall (32), the drive-side seal (40) sealingly engaged with the ballscrew (6).

4. The actuator (2) of claim 1 or 2, further comprising a shaft (26) connected to and configured to drive the ballscrew (6), wherein the shaft (26) extends through the drive-side wall (32), and wherein the actuator (2) further comprises a drive-side seal (40) at the drive-side wall (32), the drive-side seal (40) sealingly engaged with the shaft (26).

5. The actuator of any preceding claim, further comprising at least one hole (23) through a wall of the actuator rod (18), the hole (23) fluidly connecting the bore (38) and the helical passageway (14).

6. The actuator of claim 5, wherein one or more of the at least one radially-extending holes comprises a flow-restriction device (29).

7. The actuator (2) of any preceding claim, wherein the actuator rod (18) further comprises a piston (24) disposed within the bore (38) and configured to move with the actuator rod (18), wherein the piston (24) has an axial cross-sectional shape complementary to a cross-sectional shape of the bore (38).

8. The actuator (2) of claim 7, wherein the piston (24) comprises a piston seal (25) on a radially outer surface of the piston (24), the piston seal (25) sealingly engaging with the axially-extending wall (36).

9. The actuator (2) of claim 7 or 8, further comprising at least one hole (27) extending through the piston (24) from one axial side thereof to an opposed axial side.

10. The actuator (2) of claim 9, wherein one or more of the at least one axially-extending holes (27) comprises a flow-restriction device (31, 33).

11. The actuator (2) of claim 6 or 10, wherein the flow restriction device (33) is a check valve.

12. The actuator of claim 6, 10 or 11, wherein the flow restriction device (29, 31, 33) is configured to allow differing amounts of flow through the wall or piston (24) based on a position or a movement direction of the actuator (2).

13. The actuator (2) of any preceding claim, wherein the oil lubricant (30) fills 40% or less of the volume of the empty space of the bore (38), optionally wherein the oil lubricant (30) fills 10% or more of the volume of the empty space of the bore (38).

14. The actuator (2) of any preceding claim, further comprising a drive motor (22) and gearing (28) external to the lubricant housing (4), the drive motor (22) attached to rotatably drive the ballscrew (6) via the gearing (28).

15. A thrust reverser for an aircraft engine, comprising the actuator (2) of any preceding claim.
